(19) Europäisches Patentamt
European Patent Office
Office européen des brevets

(11) **EP 3 648 014 A1**

(12) **EUROPEAN PATENT APPLICATION**

(43) Date of publication:
**06.05.2020 Bulletin 2020/19**

(51) Int Cl.:
*G06N 3/04* (2006.01)    *G06N 3/08* (2006.01)

(21) Application number: **19197815.4**

(22) Date of filing: **17.09.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.10.2018 CN 201811268719**

(71) Applicant: **FUJITSU LIMITED**
**Kanagawa 211-8588 (JP)**

(72) Inventors:
• **WANG, Mengjiao**
**Chaoyang District, Beijing 100027 (CN)**
• **LIU, Rujie**
**Chaoyang District, Beijing 100027 (CN)**

(74) Representative: **Haseltine Lake Kempner LLP**
**Lincoln House, 5th Floor**
**300 High Holborn**
**London WC1V 7JH (GB)**

(54) **MODEL TRAINING METHOD, DATA IDENTIFICATION METHOD AND DATA IDENTIFICATION DEVICE**

(57)    A method of training a student model corresponding to a teacher model is provided. The teacher model is obtained through training by taking first input data as input data and taking first output data as an output target. The method comprises training the student model by taking second input data as input data and taking first output data as an output target. The second input data is data obtained by changing the first input data.

**FIG. 2**

**Description**

**FIELD**

The present disclosure relates to a model training method, a data identification method and a data identification device. In particular, the present disclosure relates to a data identification model which performs effective learning by utilizing knowledge distillation.

**BACKGROUND**

Recently, accuracy of data identification is improved significantly by means of the deep learning network. However, a speed is a key factor to be considered in many application scenarios. Accuracy required for the application scenario should be ensured while ensuring computing speed. Therefore, advance of the data identification such as object detection depends on an increasingly deep deep learning system, but the increasingly deep learning system results in increasing calculation overhead when running. Accordingly, the concept of knowledge distillation is put forward.

A complex deep learning network structure model may be a set of multiple independent models, or may be a large network model trained under multiple constraint conditions. Once training of the complex network model is completed, a simplified model to be configured in an application terminal may be extracted from the complex model with another training method, that is, knowledge distillation. The knowledge distillation is a practical method of training a fast neural network model under supervision of the large model. The common steps include: extracting output from the large neural network layer; and forcing the small neural network to output the same result. In this way, the small neural network can learn the expression capability of the large model. The small neural network is also referred to as "student" model herein, and the large neural network is also referred to as "teacher" model.

In a previously-proposed knowledge distillation method, the "student" model and the "teacher" model generally have the same input. If the original training data set is changed, for example, training data in the original training data set is changed by a certain variation, the "teacher" model is required to be retrained according to the previously-proposed method, and then the "student" model is trained by using the knowledge distillation method. This method results in a great calculation load, since it is necessary to train a large-scale "teacher" model which is difficult to be trained.

Therefore, a new student model training method is put forward in the present disclosure. It should be noted that the background is introduced and clarified above to facilitate clear and complete illustration of technical solutions of the present disclosure, and understanding of those skilled in the art. The above technical solutions cannot be regarded as well-known to those skilled in the art, just since the technical solutions are clarified in the background.

**SUMMARY OF THE INVENTION**

The brief summary of the present disclosure is given in the following, so as to provide basic understanding on certain aspects of the present disclosure. It should be understood that, the summary is not exhaustive summary of the present disclosure. The summary is neither intended to determine key or important parts of the present disclosure, nor intended to limit the scope of the present disclosure. It is desirable to provide some concepts in a simplified form, as preamble of the detailed description later.

According to an embodiment of an aspect of the present disclosure, a method of training a student model corresponding to a teacher model is provided. The teacher model is trained through training by taking first input data as input data and taking first output data as an output target. The method comprises training the student model by taking second input data as input data and taking the first output data as an output target. The second input data is data obtained by changing the first input data.

According to an embodiment of another aspect of the present disclosure, a data identification method is provided, which comprises: performing data identification by using a student model obtained through training by using the method of training the student model corresponding to the teacher model.

According to an embodiment of another aspect of the present disclosure, a data identification device is further provided, which comprises at least one processor configured to perform the data identification method.

According to an embodiment of the present disclosure, a new model training method is put forward to increase robustness of the trained student model, without retraining the teacher model. According to the present disclosure, original data is input to the teacher model for training, and data obtained by changing the original data is input to the student model for training. In this way, the student model still has the same output as that of the teacher model. That is, for any data difference, the student model can be trained without retraining the teacher model.

**BRIEF DESCRIPTION OF THE DRAWINGS**

Reference will now be made, by way of example, to the accompanying drawings, in which:

Figure 1 is a schematic diagram showing a previously-proposed method of training a student model;

Figure 2 is a schematic diagram showing a method of training a student model according to an embodiment of the present disclosure;

Figure 3 is a flowchart of a method of training a student model according to an embodiment of the present disclosure;

Figure 4 shows a flowchart of a data identification method according to an embodiment of the present disclosure;

Figure 5 shows a schematic diagram of a data identification device according to an embodiment of the present disclosure; and

Figure 6 is a structural diagram of a general device which can implement the method of training a student model or the data identification method and device according to an embodiment of the present disclosure.

**DETAILED DESCRIPTION**

Exemplary embodiments of the present disclosure are described in conjunction with drawings hereinafter. For clearness and conciseness, not all features of the embodiments are described in the specification. However, it should be understood that those skilled in the art may make many decisions specific to implementations during a process of implementing the embodiments, so as to facilitate implementing the embodiments. The decisions may change for different implementations.

It should be noted here that, in order to avoid obscuring the present disclosure due to unnecessary details, only components closely related to solutions of the present disclosure are shown in the drawings, and other details less related to the present disclosure are omitted.

The exemplary embodiments of the present disclosure are described in conjunction with drawings hereinafter. It should be noted that, for clarity, the representation and the illustration of parts and processes which are known by those skilled in the art and irrelevant to the exemplary embodiments are omitted in the drawings and the description.

It should be understood by those skilled in the art that aspects of the exemplary embodiments may be implemented as a system, a method or a computer program product. Therefore, the aspects of the exemplary embodiments may be implemented as an only hardware embodiment, an only software embodiment (including firmware, resident software, and microcode and so on), or an embodiment of software in combination with hardware, which may be generally referred to as "circuit", "module" or "system" herein. In addition, the aspects of the exemplary embodiments may be implemented as a computer program product embodying one or more computer readable medium. The computer readable medium stores computer readable program codes. For example, computer programs may be distributed over a computer network, the computer programs may be stored in one or more remote servers, or the computer programs may be embedded in a memory of the device.

Any combination of one or more computer readable medium may be used. The computer readable medium may be a computer readable signal medium or a computer readable storage medium. The computer readable storage medium may be but not limited to electric, magnetic, optical, electromagnetic, infrared or semiconductor systems, devices or apparatuses, or any appropriate combination thereof. Specific examples (not exhaustive) of the computer readable storage medium include: electrical connection via one or more wires, a portable computer magnetic disk, hard disk, a random access memory (RAM), a read only memory (ROM), an erasable programmable read only memory (EPROM or a flash memory), optical fiber, a portable compact disk read only memory (CD-ROM), an optical storage apparatus, a magnetic storage apparatus, or any appropriate combination thereof. In the context of the present disclosure, the computer readable computer medium may be any tangible medium which includes or stores programs to be used by an instruction execution system, device or apparatus, or programs related to the instruction execution system, device or apparatus.

The computer readable signal medium may include, for example, a data signal carrying computer readable program codes which are transmitted in a baseband or transmitted as a part of carrier. The signal may be transmitted in any appropriate manner, including but not limited to electromagnetic, optical or any appropriate combination thereof.

The computer readable signal medium may be any computer readable medium which is different from the computer readable storage medium and can deliver, propagate or transmit programs to be used by the instruction execution system, device or apparatus, or program related to the instruction execution system, device or device.

The program codes stored in the computer readable medium may be transmitted via any appropriate medium, including but not limited to wireless, wired, optical cable, radio frequency, or any appropriate combination thereof.

Computer program codes for performing operations according to various aspects of the exemplary embodiments disclosed here may be written through any combination of one or more program design languages. The program design language includes: object orientated program design language, such as Java, Smalltalk and C++, and further includes conventional process-based program design language, such as "C" program design language or similar program design language.

Various aspects of the exemplary embodiments disclosed here are described with reference to the flowcharts and/or block diagrams of methods, devices (systems) and computer program products in the exemplary embodiments hereinafter. It should be understood that, each block in the flowcharts and/or block diagrams and a combination of blocks in the flowcharts and/or block diagrams may be implemented by computer program instructions. These computer program instructions may be provided to processors of a general-purpose computer, a dedicated computer or other programmable data processing device to generate a machine, so that the computer or other programmable data processing device executes the instructions to implement the device with functions and/or operations specified in the block in the flowchart and/or the block diagram.

The computer program instructions may also be stored in a computer readable storage medium which can guide the computer or other programmable data processing device to operate in a specific manner, so that instructions stored in the computer readable storage medium generate a product including instructions for performing functions/operations specified in the block in the flowchart and/or the block diagram.

The computer program instructions may be loaded to a computer or other programmable data processing device, and the computer or other programmable data processing device performs a series of operation steps to perform a process implemented by the computer, so that instructions executed on the computer or other programmable device perform a process of functions/operations specified in the block in the flowchart and/or block diagram.

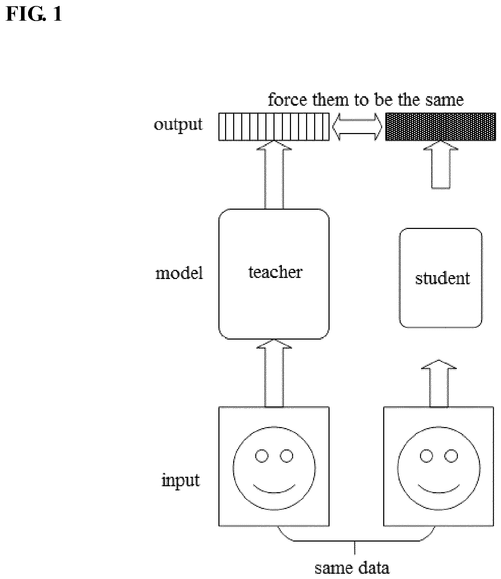

Figure 1 is a schematic diagram of a previously-proposed method of training a student model.

In the previously-proposed method of training a student model, knowledge distillation is deployed based on a difference between output of a teacher model and output of a student model, to train a small and quick student model. With this method, the student model may be forced to learn expression capability of the teacher model.

Generally, in the previously-proposed process of training the student model, all samples are treated equally, that is, weights for losses generated by different samples are the same. The method has a disadvantage that the teacher model has different confidence levels for different samples, which means that different weights should be assigned for the losses. Solutions according to embodiments of the present disclosure are described hereinafter to solve the problem.

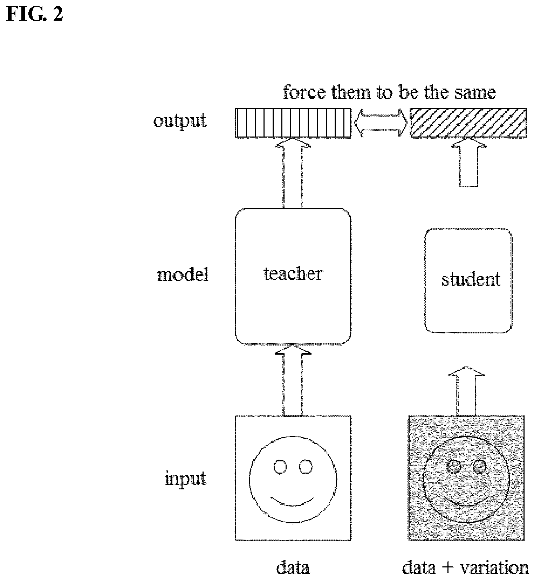

Figure 2 is a schematic diagram of a method of training a student model according to an embodiment of the present disclosure.

In the method of training a student model according to the embodiment of the present disclosure, the knowledge distillation is also deployed based on a difference between output of a teacher model and output of a student model, to train a small and quick student model, thereby forcing the student model to learn the expression capability of the teacher model. The method shown in Figure 2 differs from the previously-proposed method of training a student model shown in Figure 1 in that, a variation $\Delta$ is added to input of the student model. However, a target the same as an output target of the teacher model serves as the output target to train the student model. With this method, the trained student model can adapt to changed input data, thereby applying to more application scenarios.

In the method of training the learning model according to the embodiment of the present disclosure, the student model is trained by using a neural network. In the neural network, artificial neurons configured by simplifying functions of biological neurons are used, and the artificial neurons are connected with each other via edges with connection weights. The connection weights (parameters of the neural network) are predetermined values of the edges, and may also be referred to as connection intensity. The neural network may simulate a cognitive function or a learning process of a human brain by using the artificial neurons. The artificial neurons may also be referred to as nodes.

The neural network may include multiple layers. For example, the neural network may include an input layer, a hidden layer or an output layer. The input layer may receive input for training and send the input to the hidden layer. The output layer may generate output of the neural network based on a signal received from nodes of the hidden layer. The hidden layer may be arranged between the input layer and the output layer. The hidden layer may change training data received from the input layer into values being easy to be predicted. Nodes included in the input layer and the hidden layer may be connected to each other via edges with connection weights, and nodes included in the hidden layer and the output layer may be connected to each other via edges with connection weights. The input layer, the hidden layer and the output layer each may include multiple nodes.

The neural network may include multiple hidden layers. A neural network including multiple hidden layers may be referred to as a deep neural network. Training of the deep neural network may be referred as deep learning. Nodes included in the hidden layer may be referred to as hidden nodes. The number of the hidden layers provided in the deep neural network is not limited.

The neural network may be trained by supervised learning. The supervised learning refers to a method in which input data and corresponding output data are provided to the neural network, and connection weights of the edges are updated to output output data corresponding to the input data. For example, the model training device may update the connection weights of the edge between the artificial neurons based on the delta rule and error reverse propagation learning.

The deep network is deep-level neural network. The deep neural network has the same structure as that of the previously-proposed multi-layer perception, and adopts the same algorithm as the multi-layer perception in performing supervised learning. The deep neural network differs from the multi-layer perception in that unsupervised learning is performed before the supervised learning, and then training is performed by using the weights obtained by the unsupervised learning as initial values for the supervised learning. This difference actually corresponds to a reasonable assumption. P(x) indicates data obtained by pre-training a network by using the unsupervised learning. Then, the network is trained by using the supervised learning (such as BP algorithm), to obtain P(Y|X), where Y indicates output (such as class label). In this assumption, it is considered that learning of P(x) facilitates learning of P(Y|X). Compared with the simple supervised learning, a risk of over-fitting can be reduced with the above learning method, because in this method, not only conditional probability distribution P(Y|X) is learned, but also a joint probability distribution of X and Y is learned.

In the learning model training method according to the embodiment of the present disclosure, the deep neural network, particularly convolutional neural network, is adopted. In recent years, the convolutional neural network (CNN) is proposed. The CNN is a feedforward neural network, and its artificial neurons can respond to surrounding units within a part of coverage area. The CNN has good performance in processing large images. The CNN includes a convolutional layer and a pooling layer. The CNN is mainly used to identify a two dimensional image which has unchanged characteristics after being displaced, zoomed and distorted. A feature detection layer of the CNN performs learning from training data. Therefore, in using the CNN, the explicit feature extraction is avoided, learning is performed implicitly from training data. In addition, neurons on the same feature mapping plane have the same weights. Therefore, the network can perform parallel learning, which is an advantage of the CNN with respect to the neuron-interconnection network. The CNN has particular superiority in voice recognition and image processing due to its structure of local weight sharing, and the local part of the CNN is closer to a real biological neural network. The weight sharing reduces the complexity of the network. Particularly, an image with multi-dimensional input vectors can be directly input to the network, thereby reducing the complexity of data reconstruction during a process of feature extraction and classification. Therefore, in the learning model training method according to the embodiment of the present disclosure, the CNN is preferably used, and the student model is trained by iteratively decreasing a difference between output of the teacher model and output of the student model. The CNN is well-known to those skilled in the art, so principles of the CNN are not described in detail herein.

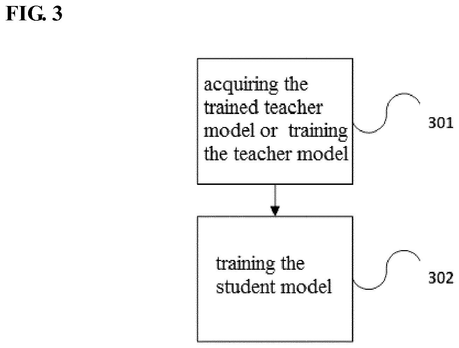

Figure 3 shows a flowchart of a learning model training method according to an embodiment of the present disclosure.

Referring to Figure 3, in step 301, a trained teacher model or a temporary training teacher model is acquired in advance. The teacher model is obtained through training by taking unchanged samples of first input data as input data and taking first output data as an output target. In step S302, the student model is trained by taking changed samples of second input data as input data and taking first output data same as output of the teacher model as an output target. The second input data is obtained by changing the first input data. The change is performed by using a signal processing method corresponding to a type of the first input data. Training in step 301 and step 302 is completed by the CNN.

In a training step of the previously-proposed student model, the student model is trained by taking samples of first input data same as input of the teacher model as input data and taking first output data same as output of the teacher model as an output target. The process may be expressed by the following equation (1):

$$S(x^i) = T(x^i) \qquad\qquad (1).$$

In the above equation (1), S indicates the student model, T indicates the teacher model, and $X^i$ indicates training samples. That is, in the previously-proposed student model training method, the student model and the teacher model have the same input samples. Therefore, once the input samples change, it is required to retrain the teacher model, and a new student model is obtained by knowledge distillation.

A difference between output of the teacher model and output of the student model may be indicated by a loss function. The common loss function includes: (1) Logit loss; (2) feature L2 loss; and (3) student model softmax loss. The three loss functions are described in detail hereinafter.

(1) Logit loss

Logit loss indicates a difference between probability distributions generated by the teacher model and the student model. Here, the loss function is calculated by using KL divergence. The KL divergence is relative entropy, which is a common method of describing a difference between two probability distributions. The Logit loss function is expressed by the following equation (2):

$$L_L = \sum_{i=1}^{m} x^t(i) \log \frac{x^t(i)}{x^s(i)} \tag{2}.$$

In the above equation (2), $L_L$ indicates Logit loss, $x^t(i)$ indicates a probability that a sample is classified into the i-th type according to the teacher model, $x^s(i)$ indicates a probability that a sample is classified into the i-th type according to the student model, and m indicates the total number of types.

(2) Feature L2 loss

The feature L2 loss is expressed by the following equation:

$$L_F = \sum_{i=1}^{m} \left\| f_{x_i}^s - f_{x_i}^t \right\| / m \tag{3}.$$

In the above equation (3), $L_F$ indicates feature L2 loss, m indicates the total number of types (the total number of samples $x_i$), $f_{x_i}^s$ indicates an output feature of the sample $x_i$ output by the student model, and $f_{x_i}^t$ indicates an output feature of the sample $x_i$ output by the teacher model.

(3) Student model softmax loss

The student model softmax loss is expressed by the following equation (4):

$$L_S = -\sum_{i=1}^{m} \log \frac{e^{w_{y^i}^T f_{x_i}^s + b_{y^i}}}{\sum_{j=1}^{n} e^{w_j^T f_{x_i}^s + b_j}} \tag{4}.$$

In the equation (4), $L_s$ indicates softmax loss, m indicates the total number of types (the total number of sample $x_i$), $y^i$ indicates a label of $x_i$, $f_{x_i}^s$ indicates an output feature of the sample $x_i$ output by the student model. The other parameters such as W and b are conventional parameters in softmax. W indicates a coefficient matrix, and b indicates an offset. These parameters are determined through training.
Based on the above three loss functions, the total loss may be expressed by the following equation:

$$L = \lambda_L L_L + \lambda_F L_F + \lambda_S L_S \tag{5}.$$

wherein $\lambda_L$, $\lambda_F$, $\lambda_S$ each are obtained through training.
The training step 302 different from the previously-proposed student model training step is described hereinafter.
Unlike the steps of the previously-proposed student model training method, in step 302 show in Figure 3 according to the embodiment of the present disclosure, a variation $\Delta$ is added to input of the student model, and this process may be expressed by the following equation (6):

$$S(x^i + \Delta) = T(x^i) \qquad (6).$$

In the above equation (6), S indicates the student model, T indicates the teacher model, x' indicates training samples, and Δ indicates variation of x'. The variation corresponds to a signal processing method corresponding to input data, i.e., the type of the sample. For example, if the training sample is an image, Δ may indicate variation generated by performing downsampling processing on the image. The type of the input data includes but not limited image data, voice data or text data. In summary, in the student model training method according to the embodiment of the present disclosure, the student model and the teacher model have different input samples.

After the variation Δ is added to the training data, the training samples of the student model become different from the training samples of the teacher model. In the student model training method according to the embodiment of the present disclosure, data or objects cannot be identified accurately by using the student model trained with the Logit loss and the feature L2 loss in the previously-proposed method. Based on data correlation between the original input samples and changed data samples, domain similarity measurement-multi-kernel maximum mean difference (MK-MMD) is adopted as the loss function. The inter-domain distance measurement is changed to the MK-MMD, inter-domain distance for multiple adaption layers can be measured simultaneously, and parameter learning of the MK-MMD does not increase training time of the deep neural network. With the model trained by the student model learning method by using the MK-MMD-based loss function, good classification results can be obtained for multiple different types of tasks. The used MK-MMD function may be expressed by the following equation (7):

$$L_{MMD^2}(x,y) = \frac{1}{N^2}\sum_{i=1}^{N}\sum_{i'=1}^{N}k(x^i,x^{i'}) + \frac{1}{M^2}\sum_{j=1}^{M}\sum_{j'=1}^{M}k(y^j,y^{j'}) + \frac{1}{MN}\sum_{i=1}^{N}\sum_{j=1}^{M}k(x^i,y^j) \qquad (7).$$

In the above equation (7), N indicates the number of samples in one type of a sample set x, and M indicates the number of samples in one type of a sample set y. In the student model training method according to the embodiment of the present disclosure, preferably, the number of samples in one type of the student model is the same as the number of samples in one type of the teacher model. That is, in the following equations, preferably, N is equal to M.

The Logit loss is optimized by using the above MK-MMD function (corresponding to MMD in the following equations). That is, the Logit loss is modified as:

$$L_L = \sum_{i=1}^{m} MMD(x^t(i), x^s(i)) \qquad (8).$$

In the above equation (8), $L_L$ indicates the modified Logit loss, $x^t(i)$ indicates a probability that the sample is classified into the i-th type according to the teacher model, $x^s(i)$ indicates a probability that the sample is classified into the i-th type according to the student model, and m indicates the total number of types.

Next, the feature loss is optimized by using the above MK-MMD function (corresponding to MMD in the following equation), that is, the feature loss is modified as:

$$L_F = \sum_{i=1}^{m} MMD(f_{x_i}^t, f_{x_i}^s) \qquad (9).$$

In the above equation (9), $L_F$ indicates the modified feature loss, m indicates the total number of types (the total number of samples $x_i$), $f_{x_i}^s$ indicates an output feature of the sample $x_i$ output by the student model, and $f_{x_i}^t$ indicates an output feature of the sample $x_i$ output by the teacher model.

The student model softmax loss is consistent with the student model softmax loss described with reference to Figure 1, and is expressed as:

$$L_S = -\sum\nolimits_{i=1}^{m} \log \frac{e^{w_{y^i}^T f_{x_i}^s + b_{y^i}}}{\sum\nolimits_{j=1}^{n} e^{w_j^T f_{x_i}^s + b_j}} \qquad (10).$$

In the above equation (10), $L_s$ indicates the softmax loss, m indicates the total number of types (the total number of samples $x_i$), $y^i$ indicates a label of $x_i$, and $f_{x_i}^s$ indicates an output feature of the sample $x_i$ output by the student model. The other parameters such as W and b are conventional parameters in the softmax. W indicates a coefficient matrix, and b indicates an offset. These parameters can be determined through training.

Based on the above-mentioned three loss functions, the total loss may be expressed by the following equation:

$$L = \lambda_L L_L + \lambda_F L_F + \lambda_S L_S \qquad (11).$$

wherein $\lambda_L$, $\lambda_F$, $\lambda_S$ are obtained by training. The student model is trained by iteratively decreasing the total loss.

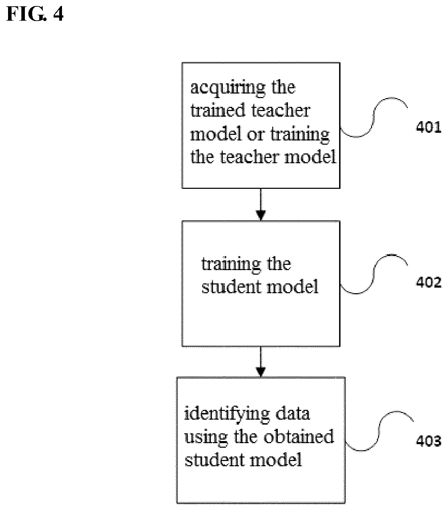

Figure 4 shows a flowchart of a data identification method according to an embodiment of the present disclosure.

Referring to Figure 4, in step 401, a trained teacher model or a temporary training teacher model is acquired in advance. The teacher model is obtained through training by taking unchanged samples of first input data as input data and taking first output data as an output target. In step 402, the student model is trained by taking changed samples of second input data as input data and taking first output data same as output of the teacher model as an output target. The second input data is obtained by changing the first input data. The changing is performed based on a signal processing method corresponding to a type of the first input data. Training in step 401 and step 402 is completed by the CNN. In step 403, data is identified by using the student model obtained in step 402.

In step 402 shown in Figure 4 according to the embodiment of the present disclosure, a variation $\Delta$ is added to input of the student model, and this process may be expressed by the following equation (12):

$$S(x^i + \Delta) = T(x^i) \qquad (12).$$

In the above equation (12), S indicates the student model, T indicates the teacher model, $x^i$ indicates training samples, and $\Delta$ indicates variation of $x^i$. The variation corresponds to the signal processing method corresponding to input data, i.e., the type of the sample. For example, if the training sample is an image, $\Delta$ may be variation generated by performing downsampling on the image. The type of the input data includes but not limited to image data, voice data or text data.

After adding the variation $\Delta$ to the training data, a training sample domain of the student model becomes different from a training sample domain of the teacher model. In the student model training method according to the embodiment of the present disclosure, the data or object cannot be identified accurately with the student model trained by the Logit loss and the feature L2 loss in the previously-proposed method shown in Figure 1. Therefore, the original Logit loss and feature L2 loss cannot be directly used in the method. Based on data correlation between the original input samples and changed data samples, the domain similarity measurement-multiple kernel maximum mean difference (MK-MMD) is used as the loss function.

By changing inter-domain distance measurement to the MK-MMD, inter-domain distance for multiple adaption layers can be measured simultaneously, and parameter learning for the MK-MMD would not increase training time of the deep neural network. With the model trained by the student model learning method by using the MK-MMD-based loss function, good classification results can be obtained for multiple different types of tasks. The used MK-MMD function may be expressed by the following equation (13):

$$L_{MMD^2}(x,y) = \frac{1}{N^2}\sum_{i=1}^{N}\sum_{i'=1}^{N}k(x^i,x^{i'}) + \frac{1}{M^2}\sum_{j=1}^{M}\sum_{j'=1}^{M}k(y^j,y^{j'}) + \frac{1}{MN}\sum_{i=1}^{N}\sum_{j=1}^{M}k(x^i,y^j) \qquad (13).$$

In the above equation (13), N indicates the number of samples in one type of the sample set x, and M indicates the number of samples in one type of the sample set y. In the student model training method according to the embodiment of the present disclosure, preferably, the number of samples in one type of the student model is the same as the number of samples in one type of the teacher model. That is, in the following equations, preferably, N is equal to M.

The Logit loss is optimized by using the above MK-MMD function (corresponding to MMD in the following equations). That is, the Logit loss is modified as:

$$L_L = \sum_{i=1}^{m} MMD(x^t(i), x^s(i)) \qquad (14).$$

In the above equation (14), $L_L$ indicates the modified Logit loss, $x^t(i)$ indicates a probability that the sample is classified into the i-th type according to the teacher model, $x^s(i)$ indicates a probability that the sample is classified into the i-th type according to the student model, and m indicates the total number of types.

Subsequently, the feature loss is optimized by using the above MK-MMD function (corresponding to MMD in the following equation). That is, the feature loss is modified as:

$$L_F = \sum_{i=1}^{m} MMD(f_{x_i}^t, f_{x_i}^s) \qquad (15).$$

In the above equation (15), $L_F$ indicates the modified feature loss, m indicates the total number of types (the total number of samples $x_i$), $f_{x_i}^s$ indicates an output feature of the sample $x_i$ output by the student model, and $f_{x_i}^t$ indicates an output feature of the sample $x_i$ output by the teacher model.

The student model softmax loss is consistent with the student model softmaxi described with reference to Figure 1, and is expressed by the following equation:

$$L_S = -\sum_{i=1}^{m} \log \frac{e^{w_{y^i}^T f_{x_i}^s + b_{y^i}}}{\sum_{j=1}^{n} e^{w_j^T f_{x_i}^s + b_j}} \qquad (16).$$

In the above equation (16), $L_s$ indicates softmax loss, m indicates the total number of types (the total number of samples $x_i$), $y^i$ indicates a label of $x_i$, $f_{x_i}^s$ indicates an output feature of the sample $x_i$ output by the student model. The other parameters such as W and b are conventional parameters in the softmax. W indicates a coefficient matrix, and b indicates an offset. These parameters are determined through training.

Based on the above three loss functions, the total loss may be expressed by the following equation:

$$L = \lambda_L L_L + \lambda_F L_F + \lambda_S L_S \qquad (17).$$

wherein, $\lambda_L$, $\lambda_F$, $\lambda_S$ are obtained by training. The student model is trained by iteratively decreasing the total loss.

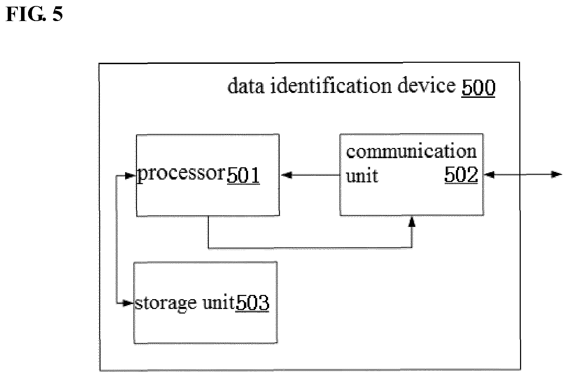

Figure 5 shows a schematic diagram of a data identification device according to an embodiment of the present disclosure.

A data identification device 500 shown in Figure 5 includes at least one processor 501. The processor 501 is configured to perform a data identification method. The data identification device may further include a storage unit 503 and/or a communication unit 502. The storage unit 503 is configured to store data to be identified and/or identified data. The communication unit 502 is configured to receive data to be identified and/or send identified data.

According to various embodiments of the present disclosure, input data of the teacher model and the student model may include image data, voice data or text data.

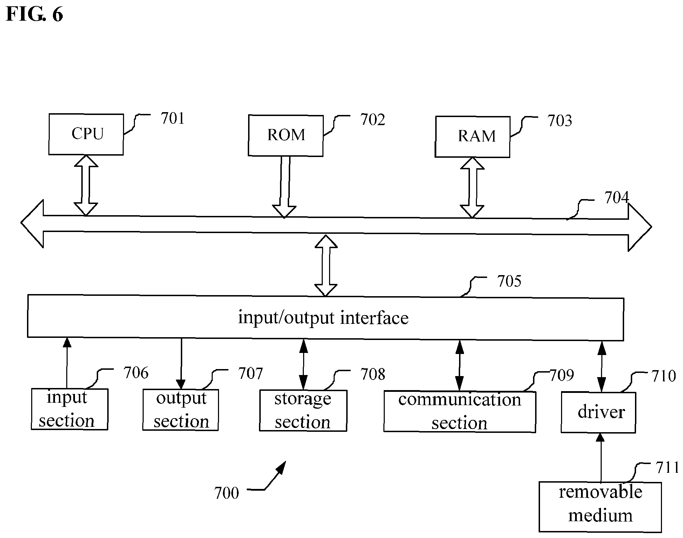

Figure 6 shows a simple structural diagram of a general-purpose machine 700 which can achieve the information processing device and the information processing method according to the embodiment of the present disclosure. The general-purpose machine 700 may be a computer system, for example. It should be noted that, the general-purpose machine 700 is schematic and does not intend to limit the use range or functions of the method and device according to the present disclosure. The general-purpose machine 700 should not be explained as depending on or requiring any element shown in the above information processing method and information processing device and a combination thereof.

In Figure 6, a central processing unit (CPU) 701 performs various types of processing according to programs stored in a read only memory (ROM) 702 or programs loaded to a random access memory (RAM) 703 from a storage section 708. If desired, data required when the CPU 701 performs various types of processing is stored in the RAM 703. The CPU 701, the ROM 702 and the RAM 703 are connected to each other via a bus 704. An input/output interface 705 is also connected to a bus 704.

The following components are also connected to the input/output interface 705: an input section 706 (including keyboard, mouse and the like), an output section 707 (including display such as cathode ray tube (CRT), liquid crystal display (LCD), speaker and the like), a storage section (including hard disk and the like), and a communication section 706 (including network interface card such as LAN card, modem and the like). The communication section 706 performs communication processing over a network such as the Internet. If desired, a driver 710 may also be connected to the input/output interface 705. A removable medium 711 such as magnetic disk, optical disk, magnetic-optical disk, semiconductor memory and the like, may be installed in the driver 710 as needed, such that computer programs read from the removable medium 711 are installed in the storage section 708.

In a case of performing the series of processing by software, programs consisting of the software may be installed from the network such as the Internet or the storage medium such as the removable medium 711.

It should be understood by those skilled in the art that the storage medium is not limited to the removable medium 711 which stores programs and is distributed separately from the device to provide programs to users shown in Figure 6. Examples of the removable medium 711 include: a magnetic disk (including floppy disk), an optical disk (including compact disk read only memory (CD-ROM) and a digital versatile disk (DVD), a magnetic optical disk (including a mini-disk) (MD) (registered trademark)), and a semiconductor memory. Alternatively, the storage medium may be hard disk included in the ROM 702 and the storage section 708. The storage medium stores programs, and is distributed to the user together with the device containing the storage medium.

In addition, a computer program product storing computer readable program instructions is further provided according to the present disclosure. The instruction codes, when being read and executed by a computer, may perform the information processing method according to the present disclosure. Accordingly, various storage media for carrying the program instructions also fall within the scope of the present disclosure.

Specific embodiments of the device and/or the method according to the embodiments of the present disclosure are clarified by detailed description with reference to the block diagrams, flowcharts and/or implementations. In a case that the block diagrams, flowcharts and/or implementations include one or more functions and/or operations, those skilled in the art should understand that various functions and/or operations in the block diagrams, flowcharts and/or implementations may be implemented independently and/or jointly by hardware, software, firmware or any combination thereof in essence. In an embodiment, several parts of the subject matter described in the specification may be implemented by application specific integrated circuits (ASIC), field programmable gate arrays (FPGA), digital signal processors (DSP) or other integrated forms. However, it should be appreciated by those skilled in the art that some aspects of the embodiments described in the specification may be equivalently implemented in a form of one or more computer programs running on one or more computers (for example, in a form of one or more computer programs running on one or more computer systems), in a form of one or more programs running on one or more processors (for example, in a form of one or more programs running on one or more microprocessors), in a form of firmware, or any combination thereof in essence, wholly or partly in the integrated circuit. In addition, according to contents disclosed in the specification, those skilled in the art can design the circuits for the present disclosure and/or write codes for the software and/or firmware of the present disclosure.

It should be noted that, terms "comprising/including" herein indicates existing of a feature, an element, a step or a component, and does not exclude existing or adding of one or more other features, elements, steps or components. The ordinal term does not represent an implementation order or importance degree of the features, elements, steps or components defined by the terms, and is only used to mark the features, elements, steps or components for clearness of the description.

In summary, the following solutions are provided according to the embodiments of the present disclosure. However, the present disclosure is not limited thereto.

Solution 1. A method of training a student model corresponding to a teacher model, where the teacher model is obtained through training by taking first input data as input data and taking first output data as an output target, and the method includes:
training the student model by taking second input data as input data and taking the first output data as an output target, where the second input data is data obtained by changing the first input data.

Solution 2. The method according to solution 1, where the training the student model includes:

training the student model by iteratively decreasing a difference between an output of the teacher model and an output of the student model.

Solution 3. The method according to solution 2, where a difference function for calculating the difference is determined based on a data correlation between the first input data and the second input data.

Solution 4. The method according to solution 3, where the difference function is MK-MMD.

Solution 5. The method according to solution 3 or 4, where a Logit loss function and a characteristic loss function are calculated by using the difference function in the process of training the student model.

Solution 6. The method according to solution 3 or 4, where a Softmax loss function is calculated in the process of training the student model.

Solution 7. The method according to solution 6, where the teacher model and the student model have the same Softmax loss function.

Solution 8. The method according to one of solutions 1 to 4, where the first input data includes one of image data, voice data or text data.

Solution 9. The method according to solution 5, where the changing is a signal processing method corresponding to a type of the first input data.

Solution 10. The method according to any one of solutions 1 to 4, where the number of samples of the first input data is the same as the number of samples of the second input data.

Solution 11. The method according to any one of solutions 1 to 4, where a difference function for calculating the difference is determined according to multiple trained weights respectively used for multiple loss functions.

Solution 12: The method according to any one of solutions 1 to 4, where the student model is trained by using a convolutional neural network.

Solution 13. A data identification method, including:

performing data identification by using a student model obtained through training by using the method according to any one of solutions 1 to 8.

Solution 14. A data identification device, including:

at least one processor configured to implement the method according to solution 13.

Solution 15. A computer readable storage medium storing program instructions, where the program instructions are executed by a computer to perform the method according to any one of solutions 1 to 13.

The present disclosure is described above by specific embodiments according to the present disclosure. However, it should be understood that those skilled in the art can make various changes, improvements or equivalents within the spirit and scope of the appended claims. These changes, improvements or equivalents should be regarded as falling within the protection scope of the present disclosure.

**Claims**

1. A method of training a student model corresponding to a teacher model, wherein the teacher model is obtained through training by taking first input data as input data and taking first output data as an output target, the method comprising:
   training the student model by taking second input data as input data and taking the first output data as an output target, wherein the second input data is data obtained by changing the first input data.

2. The method according to claim 1, wherein training the student model comprises:
   training the student model by iteratively decreasing a difference between an output of the teacher model and an output of the student model.

3. The method according to claim 2, wherein a difference function for calculating the difference is determined based on a data correlation between the first input data and the second input data.

4. The method according to claim 3, wherein the difference function is MK-MMD.

5. The method according to claim 3 or 4, wherein a Logit loss function and a characteristic loss function are calculated by using the difference function in the process of training the student model.

6. The method according to claim 3 or 4, wherein a Softmax loss function is calculated in the process of training the student model.

7. The method according to any one of claims 1 to 4, wherein the first input data comprises one of image data, voice data or text data.

8. The method according to claim 5, wherein the changing is a signal processing method corresponding to a type of the first input data.

9. A data identification method, comprising:
performing data identification by using a student model obtained through training by using the method according to any one of claims 1 to 8.

10. A data identification device, comprising:
at least one processor configured to implement the method according to claim 9.

**FIG. 1**

**FIG. 2**

**FIG. 3**

```
┌─────────────────────┐
│ acquiring the       │
│ trained teacher     │⌒  301
│ model or  training  │
│ the teacher model   │
└─────────────────────┘
           │
           ▼
┌─────────────────────┐
│                     │
│ training the        │⌒  302
│ student model       │
│                     │
└─────────────────────┘
```

**FIG. 4**

acquiring the
trained teacher
model or training
the teacher model — 401

training the
student model — 402

identifying data
using the obtained
student model — 403

**FIG. 5**

data identification device <u>500</u>

processor <u>501</u>

communication unit <u>502</u>

storage unit <u>503</u>

**FIG. 6**

Europäisches
Patentamt

European
Patent Office

Office européen
des brevets

## EUROPEAN SEARCH REPORT

Application Number

EP 19 19 7815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Jong-Chyi Su ET AL: "Adapting Models to Signal Degradation using Distillation", , 29 August 2017 (2017-08-29), XP055674483, Retrieved from the Internet: URL:https://arxiv.org/pdf/1604.00433.pdf [retrieved on 2020-03-06] * the whole document * | 1-10 | INV. G06N3/04 G06N3/08 |
| X | US 2017/011738 A1 (SENIOR ANDREW W [US] ET AL) 12 January 2017 (2017-01-12) * the whole document * | 1-10 | |
| A | ZEHAO HUANG ET AL: "Like What You Like: Knowledge Distill via Neuron Selectivity Transfer", ARXIV.ORG, CORNELL UNIVERSITY LIBRARY, 201 OLIN LIBRARY CORNELL UNIVERSITY ITHACA, NY 14853, 5 July 2017 (2017-07-05), XP080774415, * the whole document * | 1-10 | |
| A | GEOFFREY HINTON ET AL: "Distilling the Knowledge in a Neural Network", CORR (ARXIV), vol. 1503.02531v1, 9 March 2015 (2015-03-09), pages 1-9, XP055549014, * the whole document * | 1-10 | TECHNICAL FIELDS SEARCHED (IPC)  G06N |

-/--

The present search report has been drawn up for all claims

| Place of search | Date of completion of the search | Examiner |
|---|---|---|
| The Hague | 16 March 2020 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt

European Patent Office

Office européen des brevets

**EUROPEAN SEARCH REPORT**

Application Number

EP 19 19 7815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | MENGJIAO WANG ET AL: "Improved Knowledge Distillation for Training Fast Low Resolution Face Recognition Model", 2019 IEEE/CVF INTERNATIONAL CONFERENCE ON COMPUTER VISION WORKSHOP (ICCVW), 1 October 2019 (2019-10-01), pages 2655-2661, XP055674469, DOI: 10.1109/ICCVW.2019.00324 ISBN: 978-1-7281-5023-9 * the whole document * ----- | 1-10 | |

TECHNICAL FIELDS
SEARCHED      (IPC)

The present search report has been drawn up for all claims

| Place of search | Date of completion of the search | Examiner |
|---|---|---|
| The Hague | 16 March 2020 | Moro Pérez, Gonzalo |

EPO FORM 1503 03.82 (P04C01)

## ANNEX TO THE EUROPEAN SEARCH REPORT
## ON EUROPEAN PATENT APPLICATION NO.

EP 19 19 7815

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2020

| Patent document cited in search report | Publication date | Patent family member(s) | Publication date |
|---|---|---|---|
| US 2017011738 A1 | 12-01-2017 | NONE | |

EPO FORM P0459

For more details about this annex : see Official Journal of the European Patent Office, No. 12/82